Europäisches Patentamt

European Patent Office

Office européen des brevets

(19)

(11) Publication number: **0 239 789**

**A2**

(12) **EUROPEAN PATENT APPLICATION**

(21) Application number: **87102703.3**

(22) Date of filing: **25.02.87**

(51) Int. Cl.³: **C 04 B 35/56**
**C 04 B 35/64**

(30) Priority: **28.02.86 SE 8600902**

(43) Date of publication of application:
**07.10.87 Bulletin 87/41**

(84) Designated Contracting States:
**DE FR GB IT**

(71) Applicant: **ASEA CERAMA AB**

**S-915 00 Robertsfors(SE)**

(72) Inventor: **Adlerborn, Jan**
**Granbacken 10**
**S-915 00 Robertsfors(SE)**

(72) Inventor: **Hermansson, Leif**
**Johan Vales Väg 9**
**S-915 00 Robertsfors(SE)**

(74) Representative: **Boecker, Joachim, Dr.-Ing.**
**Rathenauplatz 2-8**
**D-6000 Frankfurt a.M. 1(DE)**

(54) **Method of manufacturing bodies of boron carbide.**

(57) Method of manufacturing bodies of boron carbide of at least nearly theoretical density by isostatic pressing of a powder of boron carbide or of a body performed from the powder at a temperature which is higher than 1500°C but lower than 2000°C and at a pressure of at least 50 MPa. The powder used during the manufacture consists of a fine-grained powder, from which all grains having a maximum size larger than 4 micrometers, preferably having a maximum size larger than 2 micrometers, are removed prior to the pressing.

Croydon Printing Company Ltd.

EP 0 239 789 A2

ASEA CERAMA AB
S-915 00 Robertsfors / Sweden

Method of manufacturing bodies of boron carbide

The invention aims at a method of manufacturing bodies of boron carbide according to the precharacterising part of claim 1.

Boron carbide, $B_4C$, is an extremely hard material with great wear resistance, which enable it to be used in various grinding tools. Normally, bodies of boron carbide are manufactured by pressing powder of boron carbide in molds with punches or in a pressure-free manner at a temperature exceeding 2000°C. The boron carbide grains are then sintered together. Normally, sintering agents, for example boron or silicon, are added to the powder.

The invention aims at a method of manufacturing bodies of boron carbide of the afore-said kind which makes possible the manufacture of densified bodies of boron carbide of at least nearly theoretical density exhibiting excellent strength properties.

According to the invention this is achieved by removing, from a fine-grained powder of boron carbide, all grains having a maximum size larger than 4 micrometers, preferably having a maximum size larger than 2 micrometers, whereafter the powder thus treated, or a body preformed therefrom, is subjected to isostatic pressing at a pressure of at least 50 MPa and at a temperature higher than 1500°C but lower than

$2000^{\circ}C$. By the maximum size of a grain is meant the dimension of the grain in the direction of its longest extension.

A possible explanation for the good results is that the occurrence of larger grains - also occasional such grains - in the sintered product dramatically reduces the strength of the sintered product. The occurrence of larger grains in the microstructure of the sintered product is avoided partly by using as starting material during the pressing a powder from which all grains having a maximum size larger than 4 micrometers, preferably all grains having a maximum size larger than 2 micrometers, are removed so that the powder no longer contains such grains, and partly by carrying out the pressing as an isostatic pressing, which has proved to allow the use of a surprisingly low temperature during the sintering thus suppressing grain growth during the sintering. This results in a markedly enhanced mechanical strength in the sintered body. The use of a low temperature during the sintering also facilitates the possibilities of controlling reactions between the encapsulating materials and the boron carbide and reduce the stresses on the equipment used.

The powder used for the method according to the invention may consist of commercially available qualities from which, as is clear from the above, grains having a maximum size larger than 4 micrometers, preferably having a maximum size larger than 2 micrometers, have been removed, for example by sieving and/or sedimentation before carrying out the isostatic pressing.

In addition to $B_4C$, the material in the powder may include boron, carbon, iron, oxygen and silicon, originating from the manufacture, in conventional contents. Preferably, no sintering agents are added; however, it is possible, per se, to use sintering agents such as boron or silicon.

The powder is preferably preformed into a coherent body. This can take place by loose sintering, that is, by sintering a powder, filled into a cavity, in vacuum or a protective gas so as to form a coherent body but without any significant densification taking place. This can also be done by subjecting the powder to an isostatic compaction, the powder for example being arranged in a sealed capsule of a yielding material, such as a capsule of plastics. The compaction can advantageously be carried out without the use of a binder at room temperature or other temperature which is considerably lower than the temperature during the compaction in connection with the sintering. The product can thereafter be given the desired shape by means of machining. For the preforming it is also possible to use, inter alia, conventional techniques for the manufacture of ceramic goods. The powder is then usually mixed prior to the forming with a temporary binder, for example methyl cellulose, cellulose nitrate, an acrylic binder, a wax, or a mixture of waxes. After the preforming, the binder is driven off by heating rendering the preformed powder body in all essentials free from binder.

The powder or the body preformed from the powder is enclosed, before being subjected to isostatic pressing at the sintering temperature, in a capsule, preferably of glass, such as a glass having a high melting temperature, for example Vycor glass or quartz glass. Instead of using glass, another encapsulating material can be used which is yielding at the sintering temperature, such as molybdenum or tantalum.

The isostatic pressing can be carried out preferably at a temperature of $1600^{\circ}C - 1800^{\circ}C$. The pressure preferably amounts to at least 100 MPa, suitably to 100 - 400 MPa.

0239789

The invention will now be explained in greater detail with reference to the following examples.

## Example 1

A fine-grained boron carbide powder having a specific surface area of 9.1 m$^2$/g (measured in accordance with the BET method) has a maximum grain size of the main part of the grains of 1 - 3 micrometers. Its chemical analysis is 77% B, 21.5% C, less than 0.1% Fe, 0.25% O and 300 ppm Si. Here and in the rest of this application, "%" refers to percentage by weight.

This powder is dispersed in ammonia solution, which after the addition of the powder has a pH-value of 10. The resulting suspension has a content of boron carbide of 3 per cent by volume. After sedimentation for 8 hours, a sediment is obtained containing all grains which have a maximum size larger than 3 micrometers on the bottom of the used vessel and a milky suspension above it. The suspension is separated and transferred into another vessel where it is acidified by nitric acid. This causes the boron carbide to become flocculated and sink to the bottom of the vessel. After separation of the water fraction, the residual liquid is evaporated from the sedimented boron carbide. This contains boron carbide without grains of a maximum size larger than 3 micrometers.

The powder is located in a capsule of polyvinyl chloride having a shape which is uniform with and larger than the intended shape of the finished, sintered object, and is subjected to isostatic compaction at 300 MPa at room temperature. The preformed body thus obtained has a density of 55 per cent of the theoretical density.

The performed body is subjected, encapsulated in an evacuated glass capsule, to an isostatic pressing at 1700$^{o}$C and 200 MPa for 1 hour. The density of the product then obtained is 2.51 g/cm$^3$. When manufacturing a corresponding product of the same boron carbide powder, from which no larger grains have been removed, the density is also 2.51 g/cm$^3$. The strength (bending strength), determined by means of the 3-point bending test method on rod-shaped specimens of 3 x 3 x 40 mm sliced out from products manufactured from the powder with the larger grains being removed, amounts to 714 MPa (Weibul module 8.3), and on similar rod-shaped specimens, sliced out from products of the powder from which no grains have been removed, the strength amounts to 523 MPa (Weibul module 6.3).

Example 2

Sintered bodies of boron carbide manufactured from the same powder as in Example 1 and in the same way as in Example 1, with the difference that the sedimentation of coarser particles in the first vessel proceeds for 4.5 hours. The recovered, and subsequently isostatically pressed, powder then only contains grains having a maximum size of 4 micrometers and less than 4 micrometers. The strength, determined on sliced-out rod-shaped specimens from products manufactured from this powder with the larger grains being removed, is about 25% higher than in similar rod-shaped specimens sliced out from a respective powder from which no grains have been removed.

Example 3

Sintered bodies of boron carbide are manufactured from the same powder as in Example 1 and in the same way as in Example 1, with the difference that the sedimentation of coarser particles in the first vessel proceeds for 18 hours. The re-

February 18, 1987
21.845 PE
0239789

covered, and subsequently isostatically pressed powder, then does not contain any grains having a maximum size larger than 2 micrometers. The strength, determined on sliced out rod-shaped specimens from products manufactured from the powder from which larger grains have been removed, is about 50% higher than for similar rod-shaped specimens sliced out from a respective powder from which no grains have been removed.

C L A I M S

1. Method of manufacturing bodies of boron carbide by compressing a powder of boron carbide or a product preformed from the powder at a temperature necessary for sintering the powder, c h a r a c t e r i z e d in that from a powder of boron carbide used for said manufacturing all grains with a maximum size larger than 4 micrometers are removed before the powder is subjected to the compaction by isostatic pressing at a pressure of at least 50 MPa and at a temperature which is higher than 1500$^{\circ}$C but lower than 2000$^{\circ}$C.

2. Method according to claim 1, c h a r a c t e r i z e d in that all grains having a maximum size larger than 2 micrometers are removed from the powder before the powder is used in the hot isostatic pressing process.

3. Method according to claim 1 or 2, c h a r a c t e r i z e d in that the removal of larger grains is carried out by suspending the powder in a liquid in which the larger grains are brought to sediment.

4. Method according to any of the preceding claims, c h a r a c t e r i z e d in that the isostatic pressing is carried out at a pressure of 100 - 400 MPa.

5. Method according to any of the preceding claims, c h a r a c t e r i z e d in that the isostatic pressing is carried out at a temperature of 1600 - 1800$^{\circ}$C.